# EUROPEAN PATENT APPLICATION

(11) **EP 3 809 545 A1**
(43) Date of publication of application: **21.04.2021**
(21) Application number: 20201996.4
(22) Date of filing: 15.10.2020
(51) Int. Cl.: H02G 1/08, G01B 7/00, G01V 3/12, H02G 3/38

(54) **DEVICE FOR DETERMINING A POSITION OF AT LEAST A PART OF THE DEVICE BEHIND A SURFACE**

(30) Priority: 18.10.2019 NL 2024055
(71) Applicant: Dino Beheer B.V., 7522 CZ Enschede (NL); Heibrink Beheer B.V., 8091 MK Wezep (NL)
(72) Inventor: KOKKELER, Franciscus Gerhardus Maria, 7522 CZ Enschede (NL); HEIBRINK, Jan, 8091 MK Wezep (NL)
(74) Representative: Mink-Lindenburg, Charlotte Hildegard

(57) **Abstract**

The invention relates to a device (1) comprising a ribbon-shaped body (2), which is intended for displacement behind a surface, in which a first free end of the ribbon-shaped body is provided with a head (8). The device is provided with position determining means for determining the position of at least a part of the ribbon-shaped body, comprising a signal generator (100), transmitting means (200) and detection means (400).

According to the invention the transmitting means comprise an antenna (200), said antenna is provided in the head (8) of the ribbon-shaped body (2), and wherein the device further comprises a transmission line (5, 6, 7), in which an input of the transmission line is coupled to the signal generator (100) and an output of the transmission line is coupled to the antenna (200).

## Description

The invention relates to a device provided with a ribbon-shaped body, such as a cable or spring, which ribbon-shaped body is intended for displacement behind a surface, such as a surface of a wall, floor or ceiling, by means of a pulling or pushing movement, in which a first free end of the ribbon-shaped body is provided with a head, wherein the device also comprises position determining means for determining the position of at least a part of the ribbon-shaped body, wherein the position determining means comprise a signal generator for generating an alternating electrical signal, transmitting means for generating an electromagnetic field based on the alternating electrical signal, wherein the transmitting means are arranged on the ribbon-shaped body, and comprise detection means which are arranged for detecting the electromagnetic field, wherein the field strength of the electromagnetic field is such that the electromagnetic field is detectable by the detection means.

The device according to the preamble is known in the art and is e.g. referred to as a tension spring or push spring. The known device is used to provide installation wires (such as power wires) in a wall of a building in an installation tube. In this process, an installation wire is coupled to the head of the ribbon-shaped body, after which the installation wire by means of the ribbon-shaped body is pushed or pulled through the installation tube from a first open end to a second open end.

In practice, there are sometimes barriers in the installation tube that block the passage for the ribbon-shaped body.
In this case, the barrier must first be removed by, for example, making a hole in the wall at the location of the barrier. The location of the barrier should be known accurately for this purpose.

In the known device the transmitting means are formed by an electrically conductive wire which is placed in the ribbon-shaped body. The signal generator is thereby arranged for generating an RF signal lower than the MF (MW) range. The detection means are arranged to receive the electromagnetic field generated when the RF signal is passed through the conductive wire.

The known device has the drawback that the measurement results are influenced by metal conductors in the environment, such as concrete reinforcement or another metal wiring, which are located in the vicinity of the conductive wire. Due to inductive coupling between the conductive wire and the metal conductors, the metal conductors in use also emit the RF signal, which negatively influences the accuracy, reliability and speed of the position determination.

The invention has for its object to provide a device according to the preamble in which the above-mentioned disadvantages are eliminated.

For this purpose, the device according to the invention has the feature that the transmitting means comprise an antenna, which antenna is arranged in the head of the ribbon-shaped body, and that the device further comprises a transmission line, in which an input of the transmission line is coupled to the signal generator and an output from the transmission line is coupled to the antenna.

By selecting a transmission line, the alternating electrical signal can be transported from the signal generator to the antenna with minimal losses. The antenna will subsequently generate an electromagnetic field substantially only at the location of the head, whereby the actual position of the head of the ribbon-shaped body can be accurately determined at any invisible position behind a surface, for example in a tube.
During the movement of the ribbon-shaped body through the tube, the course of the tube can be determined. The position of a possible barrier present in the tube can also be accurately determined.

In a practical preferred embodiment, the ribbon-shaped body, preferably at the location of the head, is arranged for coupling to a wire for installing, maintaining, repairing or removing the wire behind the surface.

In another preferred embodiment, the antenna is directional, so that an electromagnetic field can be generated that is substantially perpendicular to the longitudinal direction of the ribbon-shaped body.

According to a further preferred embodiment, the signal generator is arranged to generate an alternating electrical RF signal. The device according to the invention can be used in a large frequency range, wherein the signal generator requires little power. It is expected that a few penlight batteries are sufficient to measure many times longer than the known device.

In an optimal preferred embodiment, the alternating electrical RF signal has a frequency of 10 MHz or higher. In this frequency range there will be very little crosstalk, which allows positioning with very high accuracy.

According to an alternative preferred embodiment, the signal generator is arranged to generate the alternating electrical signal with a frequency lower than the MF (MW) range, preferably substantially 33 kHz. In the device according to the invention less cross-talk will occur compared to the known device, which enables a precise detection.

In a first preferred embodiment, the transmission line comprises a coaxial cable.

In a second preferred embodiment, the transmission line is formed by a balanced, parallel transmission line.

In a third preferred embodiment, the transmission line comprises two electrically conductive wires, which are twisted over substantially the length of the transmission line.

In a robust preferred embodiment, the ribbon-shaped body and the transmission line are at least partially connected when viewed from the head.

In a compact preferred embodiment, the ribbon-shaped body surrounds the transmission line. According to an elegant elaboration of the compact preferred embodiment, the ribbon-shaped body comprises a plastic outer jacket. According to a further elaboration of the elegant preferred embodiment, the space between the outer jacket and the transmission line comprises a fiber-reinforced material, comprising glass fiber, aramid fiber, carbon fiber or plastic fiber.

The invention also relates to a ribbon-shaped body as described as part of the device according to the invention.

The invention will be further elucidated with reference to the following figures, in which:
Figure 1A shows a first preferred embodiment of the device;
Figure 1B shows a cross-section of the ribbon-shaped body of the first preferred embodiment of the device;
Figure 2A shows a second preferred embodiment of the device;
Figure 2B shows a cross-section of the ribbon-shaped body of the second preferred embodiment of the device;
Figure 3A shows a third preferred embodiment of the device; and
Figure 3B shows a cross-section of the ribbon-shaped body of the third preferred embodiment of the device.

The same components are designated in the different figures with the same reference numerals.

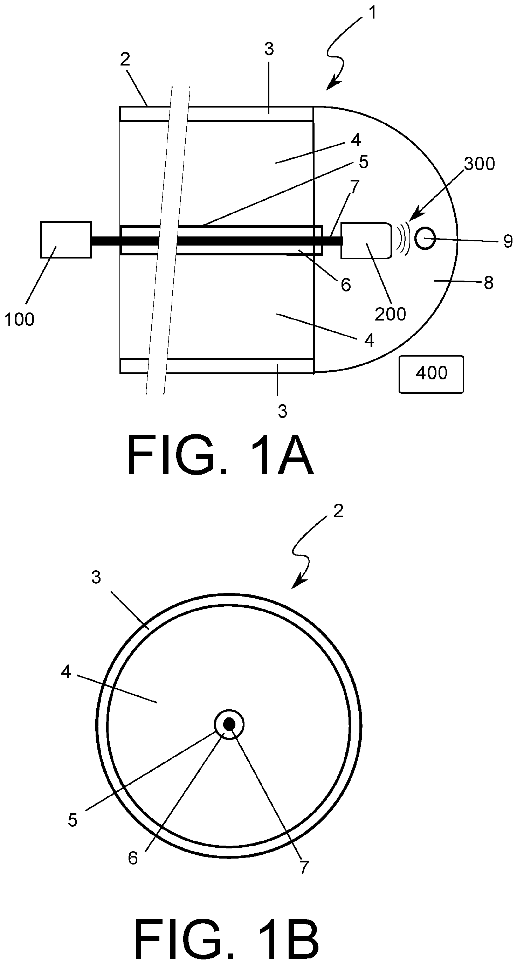

Figure 1A shows a first preferred embodiment of the device 1. The device 1 comprises a ribbon-shaped body 2, which is provided with a head 8. The first and the second end of the ribbon-shaped body 2 are shown in the figure. The body 2 can be arranged by a user of the device 1 at a non-visible location, for example behind a surface or in an installation tube (not shown). In practice, the head may encounter a barrier during movement. To overcome the barrier, it is necessary to locate the position of the head 8. For this purpose the device 1 is provided with position determining means. The position determining means comprises a signal generator 100, which generates an electrical RF signal. The position determining means further comprise a coaxial transmission line, formed by an outer jacket 5, dielectric 6 and copper core 7. The coaxial transmission line is arranged in the ribbon-shaped body 2. A first input side of the copper core 7 is connected to the signal generator 100. In addition, the position determining means comprise an antenna 200 integrated in the head 8. The antenna 200 is connected to a second output side of the copper core 7. In order to locate the head 8, the signal generator 100 is activated, which then generates an alternating electrical signal with said frequency. This signal is routed through the coaxial transmission line without electromagnetic interference to the antenna 200, after which the antenna 200 converts the electrical signal into an electromagnetic field. The position determining means comprise detection means 400 which are arranged for detecting the electromagnetic field 300. The detection means 400 are provided with a receiving antenna (not shown), which is tuned to the frequency of the electromagnetic field 300, and with means (not shown) for outputting a detection signal related to the field strength of the received electromagnetic field 300.

Figure 1B shows a cross-section of the ribbon-shaped body 2 of the first preferred embodiment of the device 1. As previously mentioned, the coaxial transmission line is arranged in the ribbon-shaped body 2. In order to prevent the pulling and pushing forces exerted in use on the ribbon-shaped body 2 being transferred to the coaxial transmission line, the coaxial transmission line is jacketed by a profile of fiber reinforced material, for example a glass fiber profile 4, in which the fibers of the fiber glass profile 4 run parallel to the longitudinal direction of the ribbon-shaped body 2. To protect the glass fiber profile 4, the ribbon-shaped body 2 is provided with a plastic outer jacket 3.

The properties of the materials and dimensions of the components of the ribbon-shaped body 2 are chosen in such a way that the ribbon-shaped body 2 has the function of a tension or push spring.

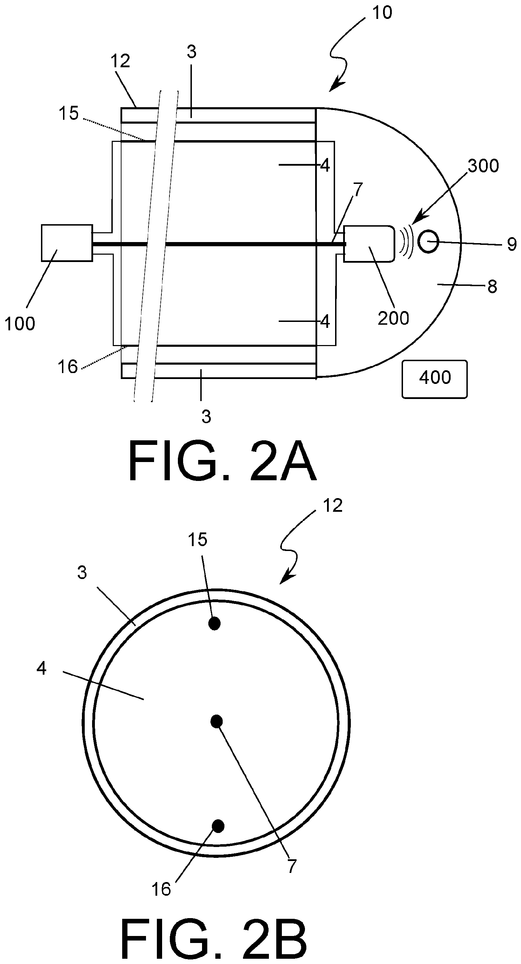

Figure 2A shows a second preferred embodiment of the device 10, in which the first and the second end of the ribbon-shaped body 12 are shown.

The second preferred embodiment of the device 10 has as an alternative to the coaxial transmission line of the first preferred embodiment 1 a balanced parallel transmission line formed by the electrically conductive wires 7, 15, 16. The electrically conductive wires 15 and 16 are located on the outside and are referred to as outer conductors. The electrically conductive wire 7 is centrally located between the outer conductors 15 and 16. In a balanced parallel transmission line, an equal but opposite current flows in each outer conductor 15, 16. In addition, over each outer conductor 15, 16 there is an equal, but opposite voltage to earth or the surrounding area around the conductor.

Figure 2B shows a cross-section of the ribbon-shaped body 12 of the second preferred embodiment of the device 10, in which the positions of the electrically conductive wires 7, 15 and 16 are shown.

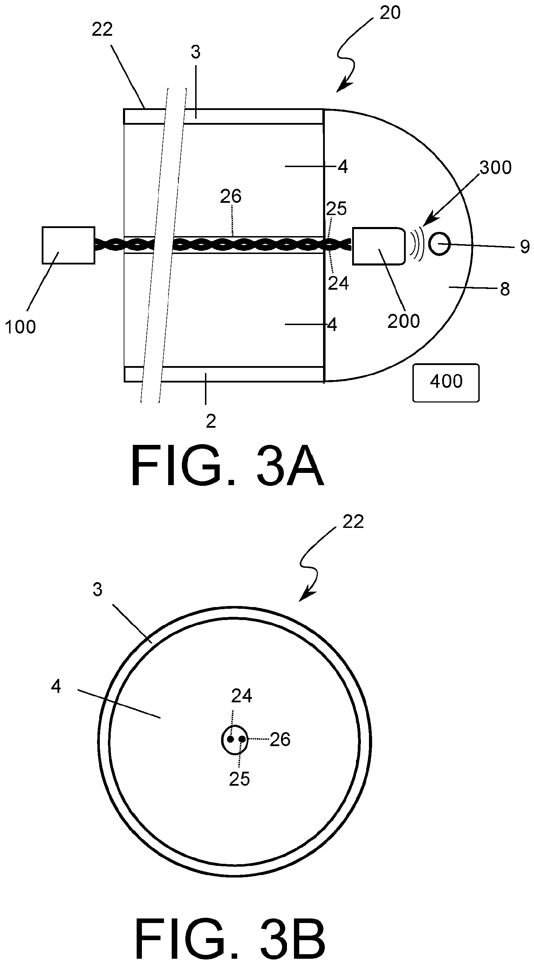

Figure 3A shows a third preferred embodiment of the device 20, in which the first and the second end of the ribbon-shaped body 22 is shown.

The second preferred embodiment of the apparatus 20 has a transmission line that is formed by a twisted pair of electrically conductive wires 24, 25. The wires 24, 25 are wound around each other, thereby avoiding electromagnetic interference (crosstalk). The wires 24, 25 are preferably contained in a jacket 26.

Figure 3B shows a cross-section of the ribbon-shaped body 22 of the second preferred embodiment of the device 20, in which the positions of the electrically conductive wires 24, 25 are shown.

In all the preferred embodiments shown, the head 8 of the ribbon-shaped body 2, 12, 20 comprises a coupling element 9, for example an eye, for coupling an installation wire. A user can attach the installation wire to the coupling element 9. The installation wire can then be pushed through an installation tube simultaneously with the ribbon-shaped body 2, 12, 20. Alternatively, the ribbon-shaped body 2, 12, 20 can first be passed through the installation tube, after which the installation wire is attached to the coupling element 9. By subsequently removing the ribbon-shaped body from the installation tube in the opposite direction, the installation wire is pulled through the installation tube. The eye is only an example of a suitable coupling element for an installation wire. The coupling element is also optional.

The invention is expressly not limited to the described and shown preferred embodiments.

In addition to the three described and shown preferred embodiments of transmission lines, many variants are possible. The number of (outer) conductors can be increased, for example.

The invention therefore extends to any embodiment that falls within the scope of protection as defined in the claims and viewed in the light of the foregoing description and accompanying figures.

## Claims

1. Device (1, 10, 20) comprising a ribbon-shaped body (2, 12, 22), such as a cable or spring, which ribbon-shaped body (2, 12, 22) is intended for displacement behind a surface, such as a surface of a wall, floor or ceiling, by means of a pulling or pushing movement, in which a first free end of the ribbon-shaped body (2, 12, 22) is provided with a head (8), in which the device (1, 10, 20) also comprises position determining means for determining the position of at least a part of the ribbon-shaped body (2, 12, 22), wherein the position determining means comprise
- a signal generator (100) for generating an alternating electrical signal;
- transmitting means for generating an electromagnetic field based on the alternating electrical signal, wherein the transmitter means are arranged to the ribbon-shaped body (2, 12, 22),
and detection means (400) which are arranged for detecting the electromagnetic field, wherein the field strength of the electromagnetic field is such that the electromagnetic field is detectable by the detection means (400), **characterized in that** the transmitting means comprise an antenna (200) for generating the electromagnetic field, which antenna (200) is arranged in the head (8) of the ribbon-shaped body (2, 12, 22), and that the device (1, 10, 20) further comprises a transmission line (5,6,7; 7), 15,16; 24,25), wherein an input of the transmission line (5,6,7; 7,15,16; 24,25) is coupled to the signal generator (100) and an output of the transmission line (5, 6.7; 7.15.16; 24.25) is coupled to the antenna (200).

2. Device (1, 10, 20) as claimed in claim 1, wherein the ribbon-shaped body (2, 12, 22) is arranged, preferably at the position of the head (8), for coupling to a wire for installing, maintaining, repairing or removing the wire behind the surface.

3. Device (1, 10, 20) according to claim 1 or 2, wherein the antenna (200) is directional.

4. Device (1, 10, 20) according to any one of the preceding claims, wherein the signal generator (100) is arranged for generating an alternating electrical RF signal.

5. Device (1, 10, 20) according to claim 4, wherein the signal generator (100) is arranged to generate the alternating electrical signal with a frequency lower than the MF (MW) range, preferably substantially 33 kHz.

6. Device (1, 10, 20) according to claim 4, wherein the signal generator (100) is arranged for generating the alternating electrical signal with a frequency of at least 10 MHz.

7. Device (1, 10, 20) according to one of the preceding claims, wherein the transmission line (5, 6, 7) comprises a coaxial cable.

8. Device (1, 10, 20) any of the preceding claims 1-6, wherein the transmission line (7, 15, 16) is a balanced, parallel transmission line.

9. Device (1, 10, 20) according to claim 1- 6, wherein the transmission line (24,25) comprises two electrically conductive wires which are twisted over substantially the length of the transmission line.

10. Device (1, 10, 20) as claimed in any of the preceding claims, wherein the ribbon-shaped body (2, 12, 22) and the transmission line (5,6,7; 7,15,16; 24,25) are at least partially connected as seen from the head (8).

11. Device (1, 10, 20) as claimed in any of the preceding claims, wherein the ribbon-shaped body (2, 12, 22) surrounds the transmission line (5,6,7;7,15,16;24,25).

12. Device (1, 10, 20) according to claim 11, wherein the ribbon-shaped body (2, 12, 22) comprises a plastic outer jacket (3).

13. Device (1, 10, 20) according to claim 12, wherein the space between the outer jacket and the transmission line (5,6,7;7,15,16;24,25) comprises a fiber-reinforced material, comprising glass fiber, aramid fiber, carbon fiber or plastic fiber.

14. Ribbon-shaped body as described as part of the device according to one of the preceding claims.
